(19) Europäisches Patentamt
European Patent Office
Office européen des brevets

(11) **EP 2 458 466 B1**

(12) **EUROPEAN PATENT SPECIFICATION**

(45) Date of publication and mention
of the grant of the patent:
**26.02.2020 Bulletin 2020/09**

(51) Int Cl.:
*G05B 23/02* *(2006.01)*   *G06Q 10/06* *(2012.01)*

(21) Application number: **10015133.1**

(22) Date of filing: **30.11.2010**

(54) **Automatic supervision and control system**

Automatisches Überwachungs- und Steuerungssystem

Système de supervision et de contrôle automatique

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**30.05.2012 Bulletin 2012/22**

(73) Proprietor: **Industrial Development of Automotivo
Components,
IDACO corp
6th October City (EG)**

(72) Inventor: **Fouad, Hisham Gamal El-Din Mahoud
6th October City (EG)**

(74) Representative: **Lorente Berges, Ana et al
A2 Estudio Legal
C/Alcalá 143, 3° Dcha.
28009 Madrid (ES)**

(56) References cited:
**WO-A1-2005/017635    US-B1- 7 379 782
US-B2- 7 110 850**

**Description**

## OBJECT OF THE INVENTION

An object of the invention is a system for monitoring in a real-time manner the efficiency and/or internal quality level (internal PPM or error count) of a company down to the level of individual tasks (if performed by a worker) or individual devices, as well as for stopping said devices or tasks.

Another object of the invention is a procedure for operating the above system in order to calculate the efficiency and/or quality (PPM or error count) of each of the tasks, either Individually or in a grouped fashion, and to stop certain tasks having a low efficiency or quality in order to maintain the overall efficiency and quality level of the whole company, or of a certain group of workers tasks, above a certain threshold.

## BACKGROUND

Managing a company has always been an extremely difficult job which basically comprises three major tasks.

Firstly, the manager must get information regarding the actual operating conditions of the company. In the old days, the manager himself would gather this information by walking around the company premises or by calling lower level managers of the company. Nowadays, faster and better communication means exist for sending the information to the manager even in real time.

Secondly, the manager has to organize all the information in such a way that it allows for performing an orderly analysis of the situation and for deciding which measures to take in order to keep the company processes under control. This task is also a difficult one, since it involves extracting conclusions in view of a number of pieces of information coming from a plurality of sources and frequently having different forms and formats. Additionally, some of the available pieces of information may be either missing or not recently updated.

Finally, the manager has to perform certain actions on tne devices or tasks causing global performance drops in the company In order to maintain such global performance above a certain efficiency and quality threshold. As before, the manager may have to do this himself, or either call or otherwise communicate with lower level managers for giving them the pertinent orders.

Even though nowadays a great number of tools exist which could aid in performing this job In a more structured and reliable manner, it is still carried out very much as explained above, since no system has been yet developed for automating the above explained steps. WO2005/017635 discloses a system and methods for determining efficiency..

## DESCRIPTION

The present invention solves the aforementioned problem by means of a new automatic supervision and control system capable of automatically gathering relevant information about the tasks carried out in a company, calculating the efficiency and/or quality level of any of these tasks in real time, and taking measures in view of the calculated efficiency and quality level (in this respect, the term "quality level" may refer to the PPM or just to an error count).

In the present document, the term "company" must be Interpreted widely, in such a way that it encompasses not only companies of any kind (industrial, services, etc.), but also factories, supermarkets, and essentially any organization for manufacturing or selling goods. Similarly, the term "task" compnses any function, or device carrying out a function, within such an organization. Examples of tasks could be production processes, maintenance processes, material handling processes, etc. and such task is carried out by a certain individual for which the system will reflect his/her current or accumulative efficiency and quality level. We believe the preferred embodiments will show clearly how these terms are to be interpreted.

Additionally, the following terms will be employed throughout the present description.

ASC:      Automatic Supervisor and Control system,
GPIO:     A General Purpose Input/Output is an interface available In some devices.
Andon:    Manufacturing term referring to a system to notify management, maintenance, and other workers of a quality or process problem
PPM:      Part per Million, a standard figure for presenting the number of errors coming out from any production or service process (how many fault in one million unit of production).
Error count:   Total number of faults or errors reported by quality inspectors.

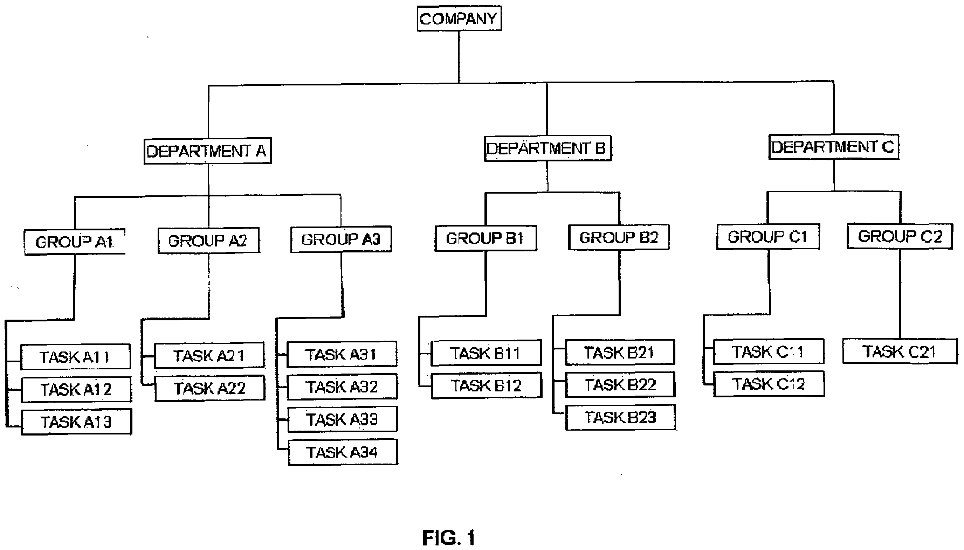

In the following pages, the system will be described when applied to a company performing a plurality of tasks, each one normally being carried out by a worker. These tasks are organized in several Groups. In turn, a number of Groups form a Department. And finally, the sum of all Departments forms the Company. This type of organization, which is represented in Fig. 1 by means of a tree diagram, could correspond, for example, to an automotive part manufacturing company. Each task would then correspond to the job of a worker in a production line. A Group of tasks would form a complete production line. The various production lines required for manufacturing a certain finished part A, B or C, let's say a steering column, would form a Department. The aggregation of the Departments, each of which would then correspond to a different finished part, would then form the Company.

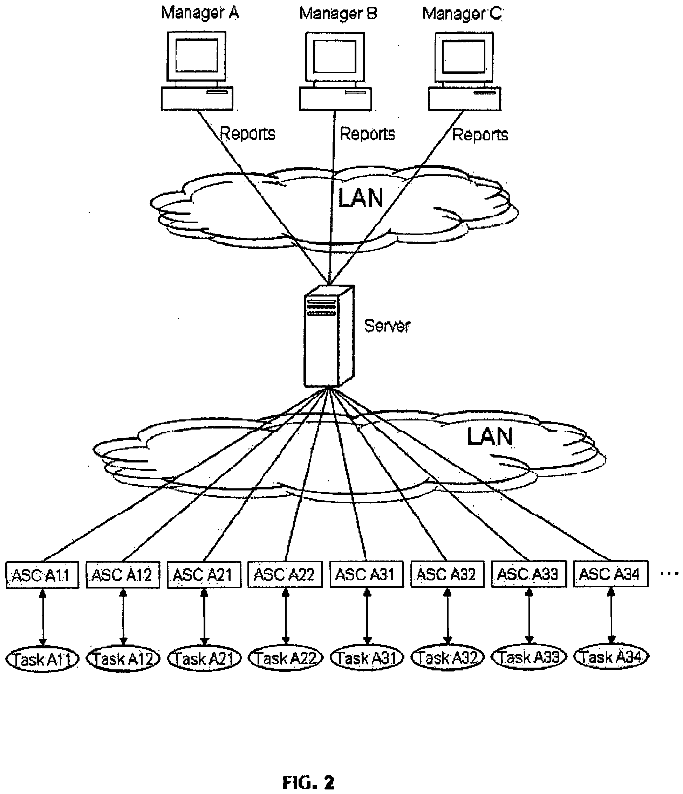

In short, the present system operates as if the company had a dedicated supervisor or engineer for each worker. That supervisor would be holding a stopwatch in his hand and calculating the time for each finished task made by the worker, comparing it to the corresponding standard operation time for that specific task, and giving this worker a real time feedback about his current efficiency, as well as his current quality level derived from the summation of PPMs or error counts related to that specific task. The system also provides the option to shut down the machine or the equipment the worker is using if the deviation from the standard operation time or quality level is unacceptable. Furthermore, the system allows for sending each worker feedback relating to their efficiency or quality. The system also provides the management with means for communication with any of the workers through a LAN by means of the so-called ASC units. Fig. 2 shows a schematic diagram of the system of the invention which will be explained in further detail below.

Therefore, a first aspect of the present invention discloses an automatic supervision and control system for a company which comprises a plurality of tasks performed by a worker or a group of workers (or employees), the system comprising first and second pluralities of ASC units, a central server and at least one managing station. In the following paragraphs each of these elements is further described.

a) A first plurality of ASC units

The ASC units are devices gathering the information relating to the tasks of the company, and may preferably also stop the task in case its efficiency or quality level is below certain threshold. In this invention, there is a first plurality ASC units associated to each worker task of the company in order to acquire information relating to the efficiency of that specific task. However, it should be understood that it would be possible to assign no ASC unit for certain tasks, or that a single ASC unit may monitor a plurality of sub-tasks. The ASC unit may be dedicated device, a PDA or a smartphone. Further, the ASC unit may consist of a conventional PC having a software ASC client, as people in the organization who have already PCs connected to the LAN do not need a physical hardware ASC unit in order to have their tasks monitored.

Each ASC unit comprises data acquisition means configured for detecting when a task has been finished and the stoppage times. According to a preferred embodiment of the invention, these data acquisition means are manual, in which case an employee in charge of the pertinent task would have to manually input the time when the task is finished and the stoppage times, for example by means of a barcode reader, a keypad, a touch screen, a push button, etc. Thus, in a preferred embodiment the ASC units comprise a barcode reader. According to another preferred embodiment, the data acquisition means are automatic sensing means, such as a GPIO (General Purpose Input Output) connected to the ASC unit. These could be, for example, a temperature sensor, a current sensor, an electric pulse sensor, a proximity sensor, a vibration sensor, and generally speaking any kind of sensor that can be connected to the ASC unit according to each scenario.

In a further preferred embodiment of the invention, the ASC unit also comprises actuating means configured for stopping said task in case its efficiency or quality level is below a certain threshold. For example, these means could actuate a power switch or the like for shutting down a machine.

In a still further prefered embodiment of the invention, the system further comprises means for sending SMS between the managing stations and the ASC units (a two way communication channel). That way, all managers and leaders of the organization are at all times in touch with all the workers they are responsible for.

b) A second plurality of ASC units

Additionally, some ASC units similar to those described above are given to a number of quality Inspectors. The quality inspectors walk around the company premises supervising the tasks and sending this quality information to the server by means of a of ASC units. Therefore, these ASC units also have a "Quality Mode" which allows these inspectors to enter data such as the error count or PPM of a certain task. In this case, the data acquisition moans may comprise merely a keypad.

c) A central server

The central server is connected to the first and second pluralities of ASC units for receiving the information acquired by said ASC units. The central server comprises:

-  A processing unit configured for calculating the efficiency and/or quality of each task, either individually or in a grouped fashion. As mentioned above, the efficiency of a task is calculated taking into account the time it took for the task to be finished in comparison with a corresponding standard operation time for that specific task, while the quality of a task is calculated by summing all errors reported by the inspectors corresponding to a specific task. Once the efficiencies and/or qualities of the tasks in a certain group or department of the company have been calculated, the processing unit can calculate the overall efficiency and/or quality of that group or department. The processing unit can also make reports showing the efficiency, quality level (PPM or just error count), the total time of stoppage, the reasons for these stoppages, etc. All these calculations are made in real time according to a method that will be set out later on in the present application.

- A database for storing the data on the tasks sent by the ASC units, as well as the individual or accumulated efficiencies and qualities calculated by the processing unit.

d) At least one managing station

Each person in charge of a group, a department, the manager of the whole company, etc. has a managing station connected to the central server. The managing station is usually simply a PC connected to the server by means of a LAN network. The managing station is configured for receiving reports relating to the efficiencies and quality levels (PPM or error count) calculated by the processing unit and showing them in real time to the pertinent person. As will be explained later on in the present document, the system will only allow each person access to the efficiency or quality data relating to the tasks he is responsible for. For example, the general manager of the company may look up the overall efficiency and the overall quality level of the whole company, as well as the efficiencies and quality levels of all departments, groups and individual tasks. However, each department manager will only have access to the efficiency and quality level data corresponding to that department and to the tasks of that specific department.

The connection between the server and the ASC units and managing station is carried out by means of a LAN. For example, an Ethernet or Wifi network may be employed for this purpose. Alternatively, in case the company premises so require, an Internet connection can be used for connecting these elements. In this manner, all workers having an ASC unit and their direct supervisor and managers having managing stations are in continuous communication.

The Invention also discloses a method for monitoring the efficiency and/or quality level of a company. In order to achieve that purpose, the method monitors each task in the organization and links all the tasks of the organization together by means of the accumulated efficiencies and qualities (PPMs or error counts) of groups and departments. According to a prefered embodiment of the invention, if the efficiency or quality level falls below a predetermined value, the method may stop tasks whose efficiency or quality level is too low, for example shutting down machines or giving stop orders to the workers through the ASC units.

A second aspect of the invention thus describes a method for supervising a company comprising a plurality of tasks which comprises the following steps:

1) Obtaining, by means of a first plurality of ASC units associated to the tasks, an identification of each specific task, the time when that task is finished, and the stoppage time during that task.
As disclosed above, the data on finish times of each task is input either automatically or manually by the corresponding worker. For example, the worker may input the finish time of a given task by pressing a count pushbutton in the ASC unit or by reading a barcode with a barcode reader implemented in the ASC unit. Alternatively, the ASC unit may be connected to a sensor indicating the beginning and/or the end of the task. For example, a proximity sensor installed in a certain tool may automatically convey a signal to the ASC unit indicating that the task has finished. Similarly, the data on the stopagge time, as well as the reasons for these stoppages, is input through the ASC unit manually or automatically.
Additionally, before starting to work, each worker must log in the corresponding ASC unit with a user name and a password, and must also input a code identifying the specific task he will carry out. That way, the server will be able to assign the right standart duration to each specific task in the company when performing the efficiency calculations.

2) Obtaining, by means of a second plurality of ASC units associated to quality inspectors, information relating to the quality of the tasks performed by the workers of the company. The inspectors will count the faults and errors corresponding to any specific task, and will input this information in their ASC units (the ASC units are for this purpose configured in the quality mode).

3) Sending the data about the identification of the tasks, the tasks finish times, the tasks stoppage times and the reasons for these stoppages, and the quality information to a central server by means of a LAN.
The data is transferred from each of the ASC units to the server database through the LAN (Local Area Network). Connecting the ASC unit to the network as simple as connecting a PC to a LAN. The LAN could be an Ethernet network or a Wifi network, in which case the ASC unit may be connected to the LAN wirelessly.

4) Calculating, in the central server, the efficiency of each task by comparing its duration with a standard duration associated to said task, as well as the quality of each task.

As disclosed above, the central server comprises a database and a processing unit. Firstly, data collected by the ASC units is stored in the database. Then, the processing unit analyzes said data in order to get the current efficiency and quality for any task, as well as the accumulative efficiency or quality corresponding to groups, departments, or the whole company.

Indeed, a Standard Time Duration has been previously assigned to each task or process in the company and stored in the server database. The processing unit now calculates in real-time the Actual Time Duration of the current task as the subraction of the current task finish time minus the previous task finish timo, and also minus the stoppage time during that period. Mathematically:

$$Actual\_Time\_Duration = \tau(n) - \tau(n-1) - \sum_{l=\tau(n-1)}^{\tau(n)} Stoppage\_Durations$$

where $\tau(n)$ represents the time of the last finished task, $\tau(n\text{-}1)$ represents the time of the previous finished task and *Stoppage Durations* are the periods of time in which the process was stopped.

The Actual Time Duration thus calculated is compared with the Standard Time Duration in order to get the Current Efficiency ($\eta_{Current}$) of a task as a percentage value:

$$\eta_{Current} = \frac{Standard\ Time\ Duration}{Actual\ Time\ Duration} * 100$$

In a prefered embodiment of the invention, Accumulative Efficiency ($\eta_{Acc}(n)$) can also be calculated based on the history of data which is stored in the database in real-time manner. Once the Current Efficiency of a task is calculated, it is stored in the database to contribute in the calculation of the Accumulative Efficiency for a desired period of time. This period could be a month, a week, a day or even the last hour. The equation which is used for calculating the Accumulative Efficiency is as shown:

$$\eta_{Acc(n)} = \frac{\eta_{Current(n)}}{n} + \left(\eta_{Acc(n-1)} \cdot \frac{n-1}{n}\right)$$

where $n \neq 0$

Where $n$ represents the index of the finished processes or tasks, so at $n = 0$ the process has not been started yet and, at $n = 1$ the process has just begun and was achieved for the first time. At this specific moment, the Accumulative Efficiency equals to the Current Efficiency. From that moment on, the Accumulative Efficiency Is updated every time the task is finished one more time.

The method preferably offers the option to choose the minimum time unit for calculating the Accumulative Efficiency, so that the Accumulative Efficiency can be calculated for periods such as the last hour, the last fraction of an hour, or even the last minutes, since the minimum time unit can be adjusted for fast processes. All the Accumulative Efficiencies are stored in the database and these stored data are used to get the Accumulative Efficiency over any required period of time as shown:

$$\eta_{Acc\_over\_any\_period\_of\_time} = \frac{\eta_{Acc(t_0)} + \eta_{Acc(t_0+dt)} + \eta_{Acc(t_0+2 \cdot dt)} + \ldots + \eta_{Acc(t_0+n \cdot dt)}}{n+1}$$

where $(t_0 + n \cdot dt) < t_f$

where $(\eta_{Acc})$ is the Accumulative Efficiency stored in the database for the instant of time t, $t_0$ is the start time of the period, $dt$ Is the minimum time duration unit defined by the user, $n$ is the number of samples stored in the database and $t_f$ is the end time of the period. This equation can also be expressed as shown:

$$\eta_{Acc\_over\_any\_period\_of\_time} = \frac{\sum_{t=t_0}^{t=t_f} \eta_{Acc(t)}}{number\_of\_samples}$$

As the worker carrying out each task is known, each worker can be assigned an Efficiency, thus allowing the management to assess which workers are more efficient. Additionally, the efficiency of a group or a department can therefore be calculated as the average of all the tasks in such group or department. Detailed efficiency reports containing all this information are generated in real-time at the processing unit.

On the other hand, quality reports are generated in view the quality information (PPM or error count) sent to the server by the quality inspectors. Namely, the Current PPM calculation for a certain task is based on the summation of all the counters of errors sent by any quality inspectors related to this specific task, either since the start of the task or the start of a working shift. An Accumulative PPM figure may also be calculated the same way as above but within a chosen period of time (start and end). The end of period can be chosen to be "now", meaning the Accumulative PPM will change as time passes because the start is fixed and the end of period is changes as time goes on.

5) Sending efficiency and/or quality reports from said central server to at least one managing station by means of said LAN.

The efficiency and quality reports calculated in the previous step are sent to the pertinent people. That means that not all users of this system can monitor all the tasks; there are privileges that allow a department manager to monitor only his department tasks, as well as group leaders only have access to the information related to the tasks of their groups. It is envisioned that an administrator can manage the permissions.

There are basically three kinds of reports that can be generated, to fully get a detailed representation about the organization:

Object-based report

The object could be a worker, a group, a department or the whole organization, this object-based report has two branches:

a) The first one is based on the current efficiency and the current PPM (or the current error count) of the object in real-time, and it determines the current efficiency and quality level for the different workers, groups and departments.
b) The other one is based on the accumulative efficiency and the accumulative PPM (or the accumulative error count) of the object and it determines the accumulated efficiency and the accumulative quality level for the different workers, groups and departments.

Operation-based report

This operation can be a task, a production process or any typo of processes, this operation can be performed by one worker or more than a worker. This report Is also divided into two branches:

a) The first one is based on the current performance of an operation.
b) The second is based on the accumulative efficiency or the accumulative PPM (or the accumulative error count) in a specified period of time.

Stoppage based report

This report is divided into two independent reports:

a) The first one refers to the total time which an operation or an object has been stopped regardless of the reason of this stoppage,

b) The second type of stoppage-based report refers to the total time of stoppages due to a specific department or cause so the reason of stoppage is taken into consideration.

These reports allow the efficiency and/or quality level of the whole organization to be monitored in real-time, allowing the managers to watch the current efficiency and its corresponding quality value (PPM or error count) of any task, group, department, or the whole company, in a real time manner. Any accumulated efficiency or quality (PPM or error count) can also be calculated, since a history of data is stored In the database. Accordingly, the managers or leaders can quickly determine which task is causing a drop in the efficiency or quality of a group, department or the company. Decisions are then made regarding the inefficient or low quality task and measures are taken.

According to a preferred embodiment, the method further comprises the step of sending real-time efficiency or quality feedback to ASCs of the tasks having low efficiency or quality figures. That is, the server will send each worker having a low quality their corresponding PPM or error count. This could be done, for example, by means of a counter in their ASCs showing their current quality level (PPM or error count). Similarly, the server may also send efficiency figures to those workers having a low efficiency.

According to a prefered embodiment, the method of the invention further comprises the step of stopping, by means of the ASC units, tasks whose efficiency or quality level Is below a certain threshold. For example, the server may send an order to the corresponding ASC unit to shut down the machine associated to that specific task. Ae disclosed above in the present document, this order may be sent to the worker, who then manually shuts down the machine, or else the ASC unit may have automatic stopping means, such as access to the power switch of that machine.

## BRIEF DESCRIPTION OF THE DRAWINGS

Fig. 1 shows a schematic diagram of the company organization.

Fig. 2 shows a diagram of the different elements forming part of the system of the invention.

## DESCRIPTION OF PREFERRED EMBODIMENTS

The first example is related to controlling the air-conditioning machines of a company, for example a factory or a supermarket. An ASC unit is associated to each air-conditioning machine by means of the GPIO. The manager receives the reports showing the details of the dates when the air-conditioners were turned on or off. They show also the history of stoppages. In case one of the air-conditioning machines fails too often, the manager can disconnect that specific machine by means of an order sent to the GPIO.

The second example is related to the monitorization of the temperatures of fridges in a supermarket. As before, each ASC unit has a GPIO connected to the corresponding fridge. Reports are generated showing the temperatures of the fridges in real-time. Diagrams are also generated showing the temperatures during periods of time defined by the manager. Alert messages are sent when the temperature of a fridge exceeds a pre-defined stored value in the database.

In the third example, the ASC units are employed as Andon display for notifying the workers a machine stoppage, a process problem or the need to perform maintenance works. In this case, the ASC unit includes an LCD and an alarm, so messages can be sent through the network to the ASC units. These messages may come automatically from the server or from the managing stations.

The fourth example Is related with controlling a press. In this instance, the GPIO is connected to various sensors and switches press. Usually a worker working on a manually operated press gives a signal to the press to start a pressing operation by means of a switch. In this scenario, the ASC gets the signal automatically from that switch and calculates the efficiency after comparing the Standard Operation Time recorded in the database and the Actual Operation Time derived from subtracting the time of next signal minus the time of the previous signal. The ASC ran then be used to automatically stop the machine if the efficiency is below a certain threshold, lighting up the red LED in the ASC unit and also generating a peep sound from a peeper installed inside the ASC unit, or even if the total PPM value reported by the server exceeded a certain threshold representing an unacceptable level of quality the red LED in the ASC unit is lighted up the peeper will peep and a stoppage signal is automatically generated from the ASC's GPIO to stop the press.

The fifth example relates to monitoring the scrap quantity in factories like Wiring Harness industry or similar industries. In this business, a Production Card generated by the system contains a card number and this card number links in the system to a number of terminals in this card number. So the worker will enter first the card number, then the terminal number, and then start working. The presses of the worker are saved automatically and can be used for calculating the number of terminals used in the current job from which the scrap or waste quantity can also be calculated automatically. The system can even stop automatically the press or the machine if the scrap or waste quantity exceeds a certain threshold. The following are the equations used for previous calculations:

$$Scrap\_per\_job = Total\_pressing\_operations - Actually\_achieved\_terminals$$

$$Total\_scrap = \sum_{n=1}^{N=total\_Jobs} Scrap\_per\_job(n)$$

## Claims

1. Automatic supervision and control system for a company comprising a plurality of tasks, comprising:

   a) a first plurality of ASC units, each ASC unit being associated to a corresponding task of the company, wherein each ASC unit comprises data acquisition means configured for detecting when a task has been finished;
   b) a second plurality of ASC units configured for allowing quality inspectors to enter quality data on the tasks;
   c) a central server connected to the first and second pluralities of ASC units, the central server comprising:

   - a processing unit configured for calculating the efficienciy and/or quality level of each task, either individually or in a grouped fasion; and
   - a database configured for storing the data on the tasks sent by the ASC units, as well as the efficiencies and quality levels calculated by the processing unit; and

   d) at least one managing station connected to the central server, the managing station being configured for receiving the efficiency and quality levels calculated by the processing unit,
   where the central server is configured for calculating the accumulated efficiency of each task during a certain period of time,

   and where the accumulated efficiency of a task during a period of time is calculated according to:

$$\eta_{Acc\_over\_any\_period\_of\_time} = \frac{\eta_{Acc(t_0)} + \eta_{Acc(t_0+dt)} + \eta_{Acc(t_0+2\cdot dt)} + ... + \eta_{Acc(t_0+n\cdot dt)}}{n+1}$$

   where

$$\eta_{Acc(n)} = \frac{\eta_{Current(n)}}{n} + \left(\eta_{Acc(n-1)} \cdot \frac{n-1}{n}\right).$$

2. A system according to claim 1, wherein the data acquisition means comprise manual means.

3. A system according to claim 1, wherein the data acquisition means comprise automatic sensing means.

4. A system according to claim 3, where the automatic sensing means comprise at least one of the following: a temperature sensor, a current sensor, an electric pulse sensor, a proximity sensor or a vibration sensor.

5. A system according to any of the previous claims, where each ASC unit further comprises actuating means configured for stopping said task in case its efficiency or quality level is below a certain threshold.

6. A system according to any of the previous claims, where each ASC unit further comprises an LCD for displaying messages sent from the managing stations or from the server.

7. A system according to any of the previous claims, where each ASC unit is one of the following: a PDA, a smartphone, a dedicated device or a software ASC client run in a conventional computer.

8. A system according to any of the previous claims, where the connection between the server and the ASC units and managing station is carried out by means of a LAN.

9. A method for supervising and controlling a company comprising a plurality of tasks, comprising the following steps:

   - obtaining, by means of a first plurality of ASC units associated to the tasks, an identification of each specific task, the time when that task is finished, the stoppage times and the reason for these stoppages;
   - obtaining, by means of a second plurality of ASC units associated to quality inspectors, information relating to the quality of the tasks;
   - sending the identificatin of the tasks, the tasks finish times, the tasks stoppage times and the reason for these stoppages, and the tasks quality information to a central server by means of a LAN;
   - calculating, in the central server, the current efficiency of each task by comparing its duration with a standard duration associated to said task, as well as the quality of each task; and
   - sending efficiency and quality level reports from said central server to at least one managing station by means of said LAN,
   the method further comprising the step of calculating, in the central server, the accumulated efficiency of each task during a certain period of time, where the accumulated efficiency of a task during a period of time is calculated according to:

$$\eta_{Acc\_over\_any\_period\_of\_time} = \frac{\eta_{Acc(t_0)} + \eta_{Acc(t_0+dt)} + \eta_{Acc(t_0+2\cdot dt)} + \dots + \eta_{Acc(t_0+n\cdot dt)}}{n+1}$$

   where

$$\eta_{Acc(n)} = \frac{\eta_{Current(n)}}{n} + \left( \eta_{Acc(n-1)} \cdot \frac{n-1}{n} \right).$$

10. A method according to claim 9, where the current efficiency of a task is calculated according to:

$$\eta_{Current} = \frac{Standard\ Time\ Duration}{Actual\ Time\ Duration} \times 100$$

   where

$$Actual\_Time\_Duration = \tau(n) - \tau(n-1) - \sum_{t=\tau(n-1)}^{\tau(n)} Stoppage\_Durations,$$

   where $\tau(n)$ represents the time of the last finished task, $\tau(n\text{-}1)$ represents the time of the previous finished task, and *Stoppage Durations* are the periods of time in which the task was stopped.

11. A method according to any of claims 9-10, which further comprises calculating the current or accumulated efficiency of the company, a group or a department by averaging the current or accumulated efficiency of the tasks comprised in said company, group or department.

**12.** A method according to any of claims 9-11, further comprising the step of sending realtime efficiency or quality feedback to the ASCs of the tasks having low efficiency or quality levels.

**13.** A method according to any of claims 9-12, which further comprises the step of stopping, by means of the ASC units, tasks whose efficiency or quality level is below a certain threshold.

**Patentansprüche**

**1.** Automatisches Überwachungs- und Kontrollsystem für ein Unternehmen mit einer Vielzahl von Aufgaben, bestehend aus:

a) einer ersten Vielzahl von ASC-Einheiten, wobei jede ASC-Einheit einer entsprechenden Aufgabe des Unternehmens zugeordnet ist und Datenerfassungsmittel umfasst, die konfiguriert sind, um zu erkennen, wann eine Aufgabe abgeschlossen wurde;
b) einer zweiten Vielzahl von ASC-Einheiten, die so konfiguriert sind, dass Qualitätsprüfer Qualitätsdaten zu den Aufgaben eingeben können;
c) einem zentralen Server, der an die erste und zweite Vielzahl von ASC-Einheiten angeschlossen ist und der Folgendes umfasst:

- einer Verarbeitungseinheit, die für die Berechnung des Effizienz- und/oder Qualitätsniveaus jeder Aufgabe konfiguriert ist, entweder einzeln oder gruppiert; und
- einer Datenbank, die für die Speicherung der über die von den ASC-Einheiten übermittelten Daten zu den Aufgaben sowie der von der Verarbeitungseinheit berechneten Effizienzen und Qualitätsniveaus konfiguriert ist; und

d) mindestens einer mit dem zentralen Server verbundenen Leitstelle, die für den Empfang der von der Verarbeitungseinheit berechneten Effizienz- und Qualitätsniveaus konfiguriert ist,
wobei der zentrale Server für die Berechnung der kumulierten Effizienz jeder Aufgabe während eines bestimmten Zeitraums konfiguriert ist,

wobei die kumulierte Effizienz einer Aufgabe während eines Zeitraums berechnet wird nach:

$$\eta_{Acc\_over\_any\_period\_of\_time} = \frac{\eta_{Acc(t_0)} + \eta_{Acc(t_0+dt)} + \eta_{Acc(t_0+2\cdot dt)} + \cdots + \eta_{Acc(t_0+n\cdot dt)}}{n+1}$$

*where*

$$\eta_{Acc(n)} = \frac{\eta_{Current(n)}}{n} + \left(\eta_{Acc(n-1)} \cdot \frac{n-1}{n}\right)$$

**2.** Einem System gemäß Anspruch 1, bei dem die Datenerfassungsmittel manuelle Mittel umfassen.

**3.** Einem System gemäß Anspruch 1, bei dem die Datenerfassungsmittel automatische Messmittel umfassen.

**4.** Einem System gemäß Anspruch 3, bei dem die automatischen Messmittel mindestens eines der folgenden Elemente umfassen: einen Temperatursensor, einen Stromsensor, einen elektrischen Impulssensor, einen Näherungssensor oder einen Schwingungssensor.

**5.** Einem System gemäß einem der vorstehenden Ansprüche, bei dem jede ASC-Einheit darüber hinaus Stellmittel umfasst, die für das Einstellen dieser Aufgabe konfiguriert sind, falls ihr Effizienz- oder Qualitätsniveau unter einer bestimmten Schwelle liegt.

**6.** Einem System gemäß einem der vorherigen Ansprüche, bei dem jede ASC-Einheit darüber hinaus ein LCD zur Anzeige von Nachrichten enthält, die von den Management-Stationen oder vom Server gesendet werden.

7. Einem System gemäß einem der vorherigen Ansprüche, bei dem jede ASC-Einheit eines der folgenden ist: ein PDA, ein Smartphone, ein dediziertes Gerät oder ein Software-ASC-Client, der auf einem herkömmlichen Computer läuft.

8. Einem System gemäß einem der vorherigen Ansprüche, bei dem die Verbindung zwischen dem Server und den ASC-Einheiten und der Leitstelle über ein LAN erfolgt.

9. Einem Verfahren zur Überwachung und Kontrolle eines Unternehmens mit einer Vielzahl von Aufgaben, welches die folgenden Schritte umfasst:

   - die Erzielung mithilfe einer ersten Vielzahl von ASC-Einheiten, die mit den Aufgaben verbunden sind, einer Identifizierung jeder spezifischen Aufgabe, der Zeit, wann diese Aufgabe beendet ist, der Stillstandszeiten und des Grunds für diese Stillstände;
   - die Erzielung mithilfe einer zweiten Vielzahl von ASC-Einheiten, die mit den Qualitätsprüfern verbunden sind, von Informationen über die Qualität der Aufgaben;
   - das Senden der Identifizierungen der Aufgaben, der Endzeiten der Aufgaben, der Stillstandszeiten der Aufgaben und des Grunds für diese Stillstände, und der Informationen über die Aufgabenqualität an einen zentralen Server über ein LAN;
   - die Berechnung der aktuellen Effizienz jeder Aufgabe im zentralen Server durch Vergleich ihrer Dauer mit einer Standarddauer, die der betreffenden Aufgabe zugeordnet ist, sowie der Qualität jeder Aufgabe; und
   - das Senden von Effizienz- und Qualitätsberichten von diesem zentralen Server an mindestens eine Leitstelle mittels besagtem LAN,
   wobei das Verfahren ferner den Schritt der Berechnung, im zentralen Server, der kumulierten Effizienz jeder Aufgabe während eines bestimmten Zeitraums umfasst, wobei die kumulierte Effizienz einer Aufgabe während eines Zeitraums berechnet wird nach:

$$\eta_{Acc\_over\_any\_period\_of\_time} = \frac{\eta_{Acc(t_0)} + \eta_{Acc(t_0+dt)} + \eta_{Acc(t_0+2\cdot dt)} + \cdots + \eta_{Acc(t_0+n\cdot dt)}}{n+1}$$

   where

$$\eta_{Acc(n)} = \frac{\eta_{Current(n)}}{n} + \left(\eta_{Acc(n-1)} \cdot \frac{n-1}{n}\right)$$

10. Einem Verfahren gemäß Anspruch 9, bei dem die aktuelle Effizienz einer Aufgabe berechnet wird nach:

$$\eta_{current)} = \frac{Standard\ Time\ Duration}{Actual\ Time\ Duration} + 100$$

   wobei

$$Actual_{Time_{Duration}} = \tau(n) - \tau(n-1) - \sum_{t=\tau(n-1)}^{\tau(n)} Stoppage\_Durations,$$

   wobei $\tau(n)$ die Zeit der letzten abgeschlossenen Aufgabe ist, $\tau(n-1)$ die Zeit der zuvor beendeten Aufgabe ist, und Stillstandzeiten die Zeiträume sind, in denen die Aufgabe unterbrochen wurde.

11. Einem Verfahren gemäß einem der Ansprüche 9-10, das darüber hinaus die Berechnung der aktuellen oder kumulierten Effizienz des Unternehmens, einer Gruppe oder einer Abteilung durch Mittelung der aktuellen oder kumulierten Effizienz der Aufgaben in diesem Unternehmen, dieser Gruppe oder Abteilung umfasst.

12. Einem Verfahren gemäß einem der Ansprüche 9-11, das darüber hinaus den Schritt umfasst, Effizienz- oder Qualitätsrückmeldungen in Echtzeit an die ASCs der Aufgaben mit geringem Effizienz- oder Qualitätsniveau zu senden.

13. Einem Verfahren gemäß einem der Ansprüche 9-12, das darüber hinaus den Schritt umfasst, mit Hilfe der ASC-Einheiten Aufgaben einzustellen, deren Effizienz oder Qualitätsniveau unter einer bestimmten Schwelle liegt.

## Revendications

1. Système de supervision et de contrôle automatique pour une société comportant un grand nombre de tâches, comprenant :

   a) une première série d'unités ASC, chaque unité ASC étant associée à une tâche correspondante de la société et comprenant des moyens d'acquisition de données configurés pour détecter le moment où une tâche est terminée ;
   b) une deuxième série d'unités ASC configurées pour permettre aux inspecteurs de qualité d'introduire des données de qualité sur les tâches ;
   c) un serveur central raccordé à la première et à la deuxième série d'unités ASC, le serveur central comprenant :

      - une unité de traitement configurée pour calculer le niveau d'efficacité et/ou de qualité de chaque tâche, soit individuellement, soit conjointement ; et
      - une base de données configurée pour le stockage des données sur les tâches envoyées par les unités ASC, ainsi que les rendements et les niveaux de qualités calculés par l'unité de traitement ; et

   d) au moins une station de gestion connectée au serveur central, la station de gestion étant configurée pour recevoir les niveaux d'efficacité et de qualité calculés par l'unité de traitement,
   où le serveur central est configuré pour calculer l'efficacité cumulée de chaque tâche pendant une période de temps donnée,

   et où l'efficacité cumulée d'une tâche pendant une période de temps est calculée en fonction de :

$$\eta_{Acc\_over\_any\_period\_of\_time} = \frac{\eta_{Acc}(t_0) + \eta_{Acc}(t_0+dt) + \eta_{Acc}(t_0+2 \cdot dt) + \cdots + \eta_{Acc}(t_0+n \cdot dt)}{n+1}$$

   where

$$\eta_{Acc}(n) = \frac{\eta_{Current}(n)}{n} + \left( \eta_{Acc}(n-1) \cdot \frac{n-1}{n} \right)$$

2. Un système selon la revendication 1, dans lequel les moyens d'acquisition de données comprennent des moyens manuels.

3. Un système selon la revendication 1, dans lequel les moyens d'acquisition de données comprennent des moyens de détection automatiques.

4. Un système selon la revendication 3, où les moyens de détection automatiques comprennent au moins l'un des éléments suivants : un capteur de température, un capteur de courant, un capteur d'impulsion électrique, un capteur de proximité ou un capteur de vibration.

5. Un système selon l'une quelconque des revendications précédentes, où chaque unité ASC comprend en outre des moyens d'actionnement configurés pour arrêter ladite tâche si son niveau d'efficacité ou de qualité est inférieur à un seuil déterminé.

6. Un système selon l'une quelconque des revendications précédentes, où chaque unité ASC comprend en outre un écran LCD pour afficher les messages envoyés depuis les stations de gestion ou depuis le serveur.

7. Un système selon l'une quelconque des revendications précédentes, où chaque unité ASC est l'une des suivantes :

un PDA, un smartphone, un appareil dédié ou un client ASC logiciel exécuté sur un ordinateur conventionnel.

**8.** Un système selon l'une quelconque des revendications précédentes, où la connexion entre le serveur et les unités ASC et la station de gestion est réalisée au moyen d'un réseau LAN.

**9.** Une méthode de supervision et de contrôle d'une société comportant une série de tâches, comprenant les étapes suivantes :

- l'obtention, au moyen d'une première série d'unités ASC associées aux tâches, de l'identification de chaque tâche spécifique, de l'heure à laquelle cette tâche est terminée, des heures d'arrêt et de la raison de ces arrêts ;
- l'obtention, au moyen d'une deuxième série d'unités ASC associées à des inspecteurs qualité, d'informations relatives à la qualité des tâches ;
- l'envoi de l'identification des tâches, des heures de fin des tâches, des heures d'arrêt des tâches et de la raison de ces arrêts, et des informations de qualité des tâches à un serveur central au moyen d'un réseau LAN ;
- le calcul, dans le serveur central, de l'efficacité actuelle de chaque tâche moyennant la comparaison de sa durée à une durée standard associée à ladite tâche, ainsi que de la qualité de chaque tâche ; et
- l'envoi des rapports de niveau d'efficacité et de qualité depuis ledit serveur central vers au moins une station de gestion au moyen dudit réseau LAN,
la méthode comprenant également l'étape de calcul, dans le serveur central, de l'efficacité cumulée de chaque tâche pendant une période de temps donnée, où l'efficacité cumulée d'une tâche pendant une période de temps est calculée en fonction de :

$$\eta_{Acc\_over\_any\_period\_of\_time} = \frac{\eta_{Acc(t_0)}+\eta_{Acc(t_0+dt)}+\eta_{Acc(t_0+2\cdot dt)}+\cdots+\eta_{Acc(t_0+n\cdot dt)}}{n+1}$$

where

$$\eta_{Acc(n)} = \frac{\eta_{Current(n)}}{n} + \left(\eta_{Acc(n-1)} \cdot \frac{n-1}{n}\right)$$

**10.** Une méthode selon la revendication 9, où l'efficacité actuelle d'une tâche est calculée selon :

$$\eta_{current)} = \frac{Standard\ Time\ Duration}{Actual\ Time\ Duration} + 100$$

où

$$Actual_{Time_{Duration}} = \tau(n) - \tau(n-1) - \sum_{t=\tau(n-1)}^{\tau(n)} Stoppage\_Durations,$$

où $\tau(n)$ représente l'heure de la dernière tâche terminée, $\tau(n-1)$ représente l'heure de la tâche terminée précédente, et où les durées d'arrêt sont les périodes durant lesquelles la tâche a été arrêtée.

**11.** Une méthode selon l'une quelconque des revendications 9-10, qui consiste en outre à calculer l'efficacité actuelle ou cumulée de la société, d'un groupe ou d'un département en établissant une moyenne de l'efficacité actuelle ou cumulée des tâches prévues dans ladite société, le groupe ou le département.

**12.** Une méthode selon l'une quelconque des revendications 9-11, comprenant en outre l'étape d'envoi de feed-back en temps réel aux unités ASC sur l'efficacité ou la qualité des tâches ayant des niveaux d'efficacité ou de qualité faibles.

**13.** Une méthode selon l'une quelconque des revendications 9-12, qui comprend en outre l'étape d'arrêt, au moyen des unités ASC, des tâches dont le niveau d'efficacité ou de qualité est inférieur à un seuil déterminé.

**FIG. 1**

**FIG. 2**

**EP 2 458 466 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005017635 A